# EUROPEAN PATENT SPECIFICATION

(11) **EP 2 844 698 B1**
(45) Date of publication and mention of the grant of the patent: **14.08.2019**
(21) Application number: 13785064.0
(22) Date of filing: 24.04.2013
(51) Int. Cl.: C08L 69/00, C08L 67/04, C08L 31/04, C08G 64/32

(54) **TRANSPARENT ALIPHATIC POLYCARBONATE COMPOSITION AND USE THEREOF**
TRANSPARENTE ALIPHATISCHE POLYCARBONATZUSAMMENSETZUNG UND VERWENDUNG DAVON
COMPOSITION DE POLYCARBONATE ALIPHATIQUE TRANSPARENTE ET UTILISATION DE CELLE-CI

(30) Priority: 04.05.2012 KR 20120047709
(43) Date of publication of application: 11.03.2015
(73) Proprietor: SK Innovation Co., Ltd., Seoul 110-110 (KR); SK Global Chemical Co., Ltd., Seoul 110-110 (KR)
(72) Inventor: HONG, Seung Gweon, Daejeon 305-728 (KR); PARK, Jae Young, Daejeon 305-712 (KR); CHUNG, Kwang Jin, Daejeon 305-761 (KR); OK, Myung Ahn, Daejeon 305-500 (KR)
(74) Representative: Stolmár & Partner Patentanwälte PartG mbB
(86) International application number: PCT/KR2013/003485
(87) International publication number: WO 2013/165117

(56) References cited:
- EP-A1- 2 351 783
- WO-A1-2007/125039
- JP-A- 2005 220 172
- JP-A- 2007 131 757
- JP-A- 2007 131 757
- US-A1- 2003 013 821
- US-A1- 2009 234 042
- US-A1- 2012 059 078

## Description

### Technical Field

The present invention relates to a transparent blend composition of heterogeneous resins including aliphatic polycarbonate by copolymerization of carbon dioxide and at least one epoxide compound, and use thereof.

### Background Art

Recently, as a global warming countermeasure, in order to decrease generation of carbon dioxide, industrialization of aliphatic polycarbonate has progressed. The aliphatic polycarbonate has excellent processability into a soft rubber phase plastic and an easily controlled degradation property by nature, such that the aliphatic polycarbonate has been mainly studied as a biodegradable polymer. However, the aliphatic polycarbonate has a low glass transition temperature (Tg) and is easily degraded at about 200, such that the aliphatic polycarbonate has weak heat resistance. In addition, since the aliphatic polycarbonate has low elastic modulus in terms of a mechanical property and may be easily broken in the case of a thin film product, there is a limitation in using the aliphatic polycarbonate in various fields. Therefore, a technology of increasing the glass transition temperature (Tg) or heat resistance or improving the mechanical strength by blending with various resins has been required. For example, a resin composition containing polypropylene carbonate melt-mixed with polymethyl methacrylate (PMMA) or a binder for a forming process of ceramics or metal powder has been disclosed in US Patent No. 4,946,884, and a method of improving mechanical properties by melt-mixing polyvinyl chloride acetate has been disclosed in US Patent No. 4,912,149. JP2007-131757 discloses polylactic acid resin/ polyalkylene carbonate blends, wherein the polylactic acid can comprise glycolic acid-derived units. EP2351783 discloses blends comprising aliphatic polycarbonates and polyvinyl acetate.

In this polyalkylene carbonate, since it is difficult to obtain desirable characteristics by combining properties through a mixture and physical properties of a blend are not only summing individual components but may instead deteriorate desirable characteristics, mechanical properties may not be expected to be improved by simple blending with a heterogeneous resin having a balance of excellent physical properties. Therefore, research into a technology of solving these problems has been urgently demanded.

### Disclosure of Invention

### Technical Problem

An object of the present invention is to provide a transparent aliphatic polycarbonate resin composition capable of being completely blended without phase separation due to excellent compatibility to thereby significantly improve mechanical properties and adhesive force while not damaging transparency of polyalkylene carbonate itself.

### Solution to Problem

In one general aspect, a polyalkylene carbonate blend composition contains: aliphatic polycarbonate obtained by reacting carbon dioxide with one or at least two different kinds of epoxide compounds selected from a group consisting of (C2-C10)alkylene oxide substituted or unsubstituted with halogen, or alkoxy, (C4-C20)cycloalkylene oxide substituted or unsubstituted with halogen or alkoxy, and (C8-C20)styrene oxide substituted or unsubstituted with halogen, alkoxy, alkyl, or aryl; poly(D,L-lactide-co-glycolide) (PLGA); and polyvinyl acetate.

In the poly(D,L-lactide-co-glycolide) (PLGA), a weight mixing ratio of lactide and glycolide may be 85:15 to 15:85.

The poly(D,L-lactide-co-glycolide) (PLGA) may have a weight average molecular weight (M_{w}) of 10,000 to 200,000.

A weight mixing ratio of the aliphatic polycarbonate and the poly(D,L-lactide-co-glycolide) (PLGA) may be 95:5 to 5:95.

The polyalkylene carbonate blend composition further contains polyvinyl acetate.

The polyvinyl acetate may be contained at a content of 5 to 95 weight% of the aliphatic polycarbonate.

Exemplary aliphatic polycarbonates are represented by the following Chemical Formula 1.

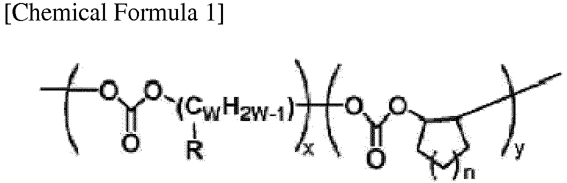

[In Chemical Formula 1, w is an integer of 2 to 10, x is an integer of 5 to 100, y is an integer of 0 to 100, n is an integer of 1 to 3, and R is hydrogen, (C1-C4) alkyl, or -CH₂-O-R' (R' is (C1-C8)alkyl.]

The aliphatic polycarbonate may have a weight average molecular weight (M_{w}) of 10,000 to 350,000.

The aliphatic polycarbonate may have a melt index (150°C/5kg) of 0.01 to 350.

The polyalkylene carbonate blend composition may further contain one or two or more additives selected from a pigment, a dye, a filler, an antioxidant, a sunscreen agent, an antistatic agent, an anti-blocking agent, a slip agent, an inorganic filler, a mixing agent, a stabilizer, a tackifier resin, a modified resin, a leveling agent, a fluorescent whitening agent, a dispersant, a heat stabilizer, a photo-stabilizer, an ultraviolet absorber, a lubricant, and plasticizer.

The polyalkylene carbonate blend composition may be mixed by a twin screw extruder or solvent casting.

In another general aspect, a molded article contains the composition as described above and may be used for an interlayer sheet, an optical or package film, or a resin binder, but is not limited thereto.

### Advantageous Effects of Invention

A polyalkylene carbonate blend composition according to the present invention may improve mechanical properties such as tensile strength, elongation, impact strength, or the like, and have excellent adhesive force to a surface of a polymer such as PET, or the like, or glass simultaneously while not damaging transparency of polyalkylene carbonate itself. In addition, the polyalkylene carbonate blend composition may have significantly excellent compatibility to thereby be completely blended, have excellent formability to thereby be applied to various fields, be expected to improve mechanical properties by a simple process, and decrease a manufacturing cost to thereby have excellent economical efficiency.

### Detailed Description of Embodiments

The present applicant discovered that a synergic effect of maximizing adhesive force and transparency may be exhibited simultaneously with significantly improving mechanical properties by including poly(D,L-lactide-co-glycolide) (PLGA) in an aliphatic polycarbonate resin and applied for a patent on the present invention.

The present invention provides a polyalkylene carbonate blend composition including aliphatic polycarbonate, poly(D,L-lactide-co-glycolide) (PLGA) and polyvinyl acetate (PVAc).

In the present invention, the aliphatic polycarbonates filed by SK Innovation Co., (Korean Patent Laid-open Publication No. 2008-0015454, No. 2009-0090154, No. 2010-067593, and No. 2010-0013255) may be used.

In the present invention, the aliphatic polycarbonate is prepared by a copolymerization reaction of carbon dioxide and at least one epoxide compound selected from a group consisting of (C2-C20)alkyleneoxide substituted or unsubstituted with halogen, (C1-C20)alkyloxy, (C6-C20)aryloxy, or (C6-C20)ar(C1-C20)alkyl(aralkyl)oxy; (C4-C20)cycloalkyleneoxide substituted or unsubstituted with halogen, (C1-C20)alkyloxy, (C6-C20)aryloxy, or (C6-C20)ar(C1-C20)alkyl(aralkyl)oxy; and (C8-C20)styreneoxide substituted or unsubstituted with halogen, (C1-C20)alkyloxy, (C6-C20)aryloxy, (C6-C20)ar(C1-C20)alkyl(aralkyl)oxy, or (C1-C20)alkyl.

In this case, the epoxide compound may be one or at least two kinds selected from a group consisting of ethylene oxide, propylene oxide, butene oxide, pentene oxide, hexene oxide, octene oxide, decene oxide, dodecene oxide, tetradecene oxide, hexadecene oxide, octadecene oxide, butadiene monoxide, 1,2-epoxide-7-octene, epifluorohydrin, epichlorohydrin, epibromohydrin, glycidyl methyl ether, glycidyl ethyl ether, glycidyl normalpropyl ether, glycidyl sec-butyl ether, glycidyl normal or isopentyl ether, glycidyl normalhexyl ether, glycidyl normal heptyl ether, glycidyl normal octyl or 2-ethyl-hexyl ether, glycidyl normal or isononyl ether, glycidyl normal decyl ether, glycidyl normal dodecyl ether, glycidyl normal tetradecyl ether, glycidyl normal hexadecyl ether, glycidyl normal octadecyl ether, glycidyl normal icocyl ether, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxide norbonene, limonene oxide, dieldrin, 2,3-epoxide propyl benzene, styrene oxide, phenyl propylene oxide, stilbene oxide, chlorostilbene oxide, dichlorostilbene oxide, 1,2-epoxy-3-phenoxypropane, benzyl oxymethyl oxirane, glycidyl-methylphenyl ether, chlorophenyl-2,3-epoxide propyl ether, epoxypropyl methoxyphenyl ether, biphenyl glycidyl ether, glycidyl naphthyl ether, glycidyl acetic acid ester, glycidyl propionate, glycidyl butanoate, glycidyl normal pentanoate, glycidyl normal hexanoate, glycidyl heptanoate, glycidyl normal octanoate, glycidyl 2-ehtyl hexanoate, glycidyl normal nonanoate, glycidyl normal decanoate, glycidyl normal dodecanoate, glycidyl normal tetradecanoate, glycidyl normal hexadecanoate, glycidyl normal octadecanoate, and glycidyl icosanoate.

An exemplary polyalkylene carbonate is represented by the following Chemical Formula 1.

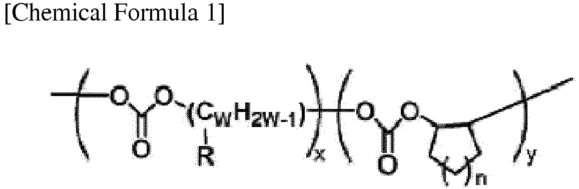

(In Chemical Formula 1, w is an integer of 2 to 10, x is an integer of 5 to 100, y is an integer of 0 to 100, n is an integer of 1 to 3, and R is hydrogen, (C1-C4) alkyl, or -CH₂-O-R' (R' is (C1-C8)alkyl).)

The alkylene in the polyalkylene carbonate may include ethylene, propylene, 1-butylene, cyclohexene oxide, alkylglycidyl ether, n-butyl, and n-octyl, but is not limited thereto.

The aliphatic polycarbonate is prepared by alternating copolymerization of carbon dioxide and at least one epoxide compound selected from a group consisting of (C2-C20)alkyleneoxide substituted or unsubstituted with halogen, (C1-C20)alkyloxy, (C6-C20)aryloxy, or (C6-C20)ar(C1-C20)alkyl(aralkyl)oxy; (C4-C20)cycloalkyleneoxide substituted or unsubstituted with halogen, (C1-C20)alkyloxy, (C6-C20)aryloxy, or (C6-C20)ar(C1-C20)alkyl(aralkyl)oxy; and (C8-C20)styreneoxide substituted or unsubstituted with halogen, (C1-C20)alkyloxy, (C6-C20)aryloxy, (C6-C20)ar(C1-C20)alkyl(aralkyl)oxy, or (C1-C20)alkyl, by using a complex compound of the following Chemical Formula 2 as a catalyst, in the presence of a polymer compound having a hydroxyl or carboxyl acid group at a terminal or a side chain thereof.

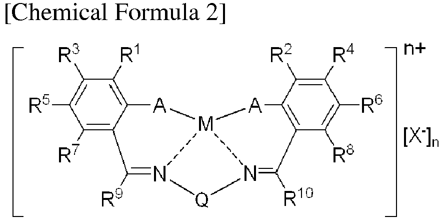

[In Chemical Formula 2,
M is trivalent cobalt or trivalent chromium;
A is an oxygen or sulfur atom;
Q is a diradical linking two nitrogen atoms;
R¹ to R¹⁰ each are independently hydrogen; halogen; (C1-C20)alkyl; (C1-C20)alkyl containing at least one of halogen, nitrogen, oxygen, silicon, sulfur, and phosphorus; (C2-C20)alkenyl; (C2-C20)alkenyl containing at least one of halogen, nitrogen, oxygen, silicon, sulfur, and phosphorus; (C1-C20)alkyl(C6-C20)aryl; (C1-C20)alkyl(C6-C20)aryl containing at least one of halogen, nitrogen, oxygen, silicon, sulfur, and phosphorus; (C6-C20)aryl(C1-C20)alkyl; (C6-C20)aryl(C1-C20)alkyl containing at least one of halogen, nitrogen, oxygen, silicon, sulfur, and phosphorus; (C1-C20)alkoxy; (C6-C30)aryloxy; formyl; (C1-C20)alkylcarbonyl; (C6-C20)arylcarbonyl; or a metalloid radical of Group 14 metal substituted with hydrocarbyl;
two of R¹ to R¹⁰ may be linked to each other to form a ring;
at least one of the hydrogens contained in R¹ to R¹⁰ and Q is a proton group selected from a group consisting of Chemical Formulas a, b, and c; 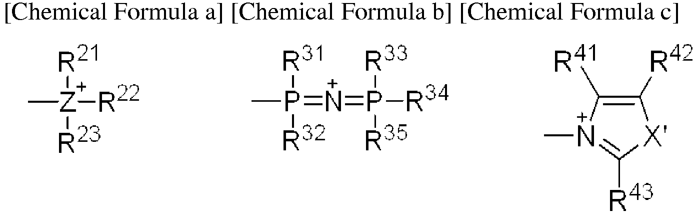
X- each are independently a halide ion; HCO3⁻; BF4⁻; ClO4⁻; NO3⁻; PF6⁻; (C6-C20)aryloxy anion; (C6-C20)aryloxy anion containing at least one of halogen atom, nitrogen atom, oxygen atom, silicon atom, sulfur atom, and phosphorus atom; (C1-C20)alkylcarboxyl anion; (C1-C20)alkyl carboxyl anion containing at least one of halogen atom, nitrogen atom, oxygen atom, silicon atom, sulfur atom, and phosphorus atom; (C6-C20)arylcarboxyl anion; (C6-C20)arylcarboxyl anion containing at least one of halogen atom, nitrogen atom, oxygen atom, silicon atom, sulfur atom, and phosphorus atom; (C1-C20)alkoxy anion; (C1-C20)alkoxy anion containing at least one of halogen atom, nitrogen atom, oxygen atom, silicon atom, sulfur atom, and phosphorus atom; (C1-C20)alkylcarbonate anion; (C1-C20)alkylcarbonate anion containing at least one of halogen atom, nitrogen atom, oxygen atom, silicon atom, sulfur atom, and phosphorus atom; (C6-C20)arylcarbonate anion; (C6-C20)arylcarbonate anion containing at least one of halogen atom, nitrogen atom, oxygen atom, silicon atom, sulfur atom, and phosphorus atom; (C1-C20)alkylsulfonate anion; (C1-C20)alkylsulfonate anion containing at least one of halogen atom, nitrogen atom, oxygen atom, silicon atom, sulfur atom, and phosphorus atom; (C1-C20)alkylamido anion; (C1-C20)alkylamido anion containing at least one of halogen atom, nitrogen atom, oxygen atom, silicon atom, sulfur atom, and phosphorus atom; (C6-C20)arylamido anion; (C6-C20)arylamido anion containing at least one of halogen atom, nitrogen atom, oxygen atom, silicon atom, sulfur atom, and phosphorus atom; (C1-C20)alkylcarbamate anion; (C1-C20)alkylcarbamate anion containing at least one of halogen atom, nitrogen atom, oxygen atom, silicon atom, sulfur atom, and phosphorus atom; or (C6-C20)arylcarbamate anion; (C6-C20)arylcarbamate anion containing at least one of halogen atom, nitrogen atom, oxygen atom, silicon atom, sulfur atom, and phosphorus atom;
Z is a nitrogen or phosphorus atom;
R²¹, R²², R²³, R³¹, R³², R³³, R³⁴, and R³⁵ each are independently (C1-C20)alkyl; (C1-C20)alkyl containing at least one of halogen, nitrogen, oxygen, silicon, sulfur, and phosphorus; (C2-C20)alkenyl; (C2-C20)alkenyl containing at least one of halogen, nitrogen, oxygen, silicon, sulfur, and phosphorus; (C1-C20)alkyl(C6-C20)aryl; (C1-C20)alkyl(C6-C20)aryl containing at least one of halogen, nitrogen, oxygen, silicon, sulfur, and phosphorus; (C6-C20)aryl(C1-C20)alkyl; (C6-C20)aryl(C1-C20)alkyl containing at least one of halogen, nitrogen, oxygen, silicon, sulfur, and phosphorus; or a metalloid radical of Group 14 metal substituted with hydrocarbyl; two of R²¹, R²², and R²³ or two of R³¹, R³², R³³, R³⁴, and R³⁵ may be linked to each other to form a ring;
R⁴¹, R⁴², and R⁴³ each are independently hydrogen; (C1-C20)alkyl; (C1-C20)alkyl containing at least one of halogen, nitrogen, oxygen, silicon, sulfur, and phosphorus; (C2-C20)alkenyl; (C2-C20)alkenyl containing at least one of halogen, nitrogen, oxygen, silicon, sulfur, and phosphorus; (C1-C20)alkyl(C6-C20)aryl; (C1-C20)alkyl(C6-C20)aryl containing at least one of halogen, nitrogen, oxygen, silicon, sulfur, and phosphorus; (C6-C20)aryl(C1-C20)alkyl; (C6-C20)aryl(C1-C20)alkyl containing at least one of halogen, nitrogen, oxygen, silicon, sulfur, and phosphorus; or a metalloid radical of Group 14 metal substituted with hydrocarbyl; two of R⁴¹, R⁴², and R⁴³ may be linked to each other to form a ring;
X' is oxygen atom, sulfur atom, or N-R (here, R is (C1-C20)alkyl);
n is an integer obtained by adding one to the total number of proton groups contained in R¹ to R¹⁰ and Q;
X⁻ may coordinate M; and
Nitrogen atom of imine may be de-coordinated from M.]

In the present invention, a preferable polyalkylene carbonate resin may be polypropylene carbonate (PPC) obtained by copolymerization of polypropylene oxide and carbon dioxide.

The polyalkylene carbonate according to the exemplary embodiment of the present invention may have a weight average molecular weight (Mw) of 10,000 to 350,000, preferably 30,000 to 250,000. In addition, a polyalkylene carbonate resin having a glass transition temperature (Tg) of 20 to 105°C and a melt index (150°C/5kg) of 0.01 to 350 may be used. It is advantageous for processing the resin into pellets to use the polyalkylene carbonate resin having a Tg and a melt index in the above-mentioned ranges.

The polyalkylene carbonate according to the exemplary embodiment of the present invention may have specific gravity of 1.15 to 1.35g/cm³. In the case in which the polyalkylene carbonate is out of the above-mentioned range, it may be difficult to exhibit the effects as described above.

In the poly(D,L-lactide-co-glycolide) (PLGA) according to the exemplary embodiment of the present invention, a weight ratio of lactide to glycolide may be 85:15 to 15:58. Preferably, the weight ratio may be 85:15 to 55:45. In the case in which the weight ratio is out of the above-mentioned range, processability with polyalkylene carbonate may be deteriorated, such that it may be difficult to expect effects of improving the transparency and mechanical properties.

The poly(D,L-lactide-co-glycolide) (PLGA) according to the exemplary embodiment of the present invention may have a weight average molecular weight (Mw) of 10,000 to 200,000. Preferably, the poly(D,L-lactide-co-glycolide) (PLGA) has a weight average molecular weight (Mw) of 40,000 to 100,000. When the weight average molecular weight is out of the above-mentioned range, processability with polyalkylene carbonate may be deteriorated, such that mechanical properties may be deteriorated and it may be difficult to expect synergic effects of increasing the transparency and adhesive force.

In the polyalkylene carbonate blend composition according to the exemplary embodiment of the present invention, a weight mixing ratio of polyalkylene carbonate to poly(D,L-lactide-co-glycolide) (PLGA) may be 95:5 to 5:95. When the weight mixing ratio is out of the above-mentioned range, it may be difficult to completely blend the resins, such that processability may be deteriorated.

The polyalkylene carbonate blend composition according to the exemplary embodiment of the present invention further contains polyvinyl acetates.

The polyalkylene carbonate blend composition according to the present invention further contains polyvinyl acetates (PVAc), adhesive force to polyethylene terephthalate (PET) may be significantly improved without damaging the transparency, and adhesive force may be excellent at a low or high temperature, thereby making it possible to providing high adhesion stability at the time of applying the composition to an optical adhesive, ink, paint, or the like. The reason is that unexpected synergic effects are exhibited due to the combination between polyalkylene carbonate, poly(D,L-lactide-co-glycolide) (PLGA), and polyvinyl acetate. In this case, a content of polyvinyl acetate may be 5 to 95 weight% of the aliphatic polycarbonate. When the content is out of the above-mentioned range, it is difficult to exhibit the synergic effect due to the combination of the components.

The polyalkylene carbonate blend composition according to the present invention may further contain one or two or more additives selected from a pigment, a dye, a filler, an antioxidant, a sunscreen agent, an antistatic agent, an anti-blocking agent, a slip agent, an inorganic filler, a mixing agent, a stabilizer, a tackifier resin, a modified resin, a leveling agent, a fluorescent whitening agent, a dispersant, a heat stabilizer, a photo-stabilizer, an ultraviolet absorber, a lubricant, and plasticizer.

The present invention is characterized in that the polyalkylene carbonate blend composition may be mixed by a twin screw extruder or solvent casting. In this case, the mixing by the twin screw extruder may be performed at 120 to 170°C and 50 to 150rpm.

The present invention provides a molded article containing the composition. The molded article may be used for an interlayer sheet, an optical or package film, or a resin binder and applied to transparent molding to thereby be used in a transparent case. However, the molded article is not limited thereto, but may be variously applied.

Hereinafter, the present invention will be understood and appreciated more fully from the following examples, and the examples are for illustrating the present invention and not for limiting the present invention.

### [Examples 1 to 6 and Comparative Examples 1 to 5]

As reagents used in the Examples, polypropylene carbonate (PPC, Mw: 92,000, Tg: 32.6) poly(D,L-lactide-co-glycolide) (PLGA, Aldrich Com.), and polyvinyl acetate (PVAc, Mw: 100,000, Aldrich Com.) were used. These materials were dissolved in acetone at a ratio shown in the following Table 1 and solvent-cast, followed by being pressed by a heating press, thereby manufacturing a film. In this case, in PLGA of Examples 2 to 6, weight mixing ratios of lactide and glycolide were 65:35, 75:25, 85:15, 75:25, and 75:25, respectively. In Comparative Example 1, a PET film (Fancylobby Corp.) was used. Optical properties of the films manufactured in the Examples and the Comparative Examples were measured, and the results were shown in Table 1.

### [Evaluation of optical properties]

### 1) Transmittance (TT) value

The TT was measured using a spectro-haze meter (TC-H3DPK-MKII).

### (2) Haze

The haze was measured using a spectro-haze meter (TC-H3DPK-MKII).

### [Evaluation of adhesive force]

### Peel-off Test (10 x 10 Cross cut)

**Table 1**

| Classification | PPC | PLGA | PVAc | Plasticizer | Thickness (µm) | Haze | TT | Peel-off |
|---|---|---|---|---|---|---|---|---|
| Example 1* | 100 | 30 | 0 | 0 | 150 | 2.64 | 90.25 | 1 |
| Example 2* | 100 | 30 | 0 | 0 | 250 | 3.72 | 90.31 | 2 |
| Example 3* | 100 | 30 | 0 | 0 | 120 | 1.52 | 90.03 | 1 |
| Example 4 | 100 | 100 | 100 | 0 | 100 | 2.16 | 89.64 | 0 |
| Example 5 | 200 | 100 | 100 | 0 | 140 | 3.58 | 89.17 | 0 |
| Example 6 | 200 | 100 | 100 | 10 | 150 | 3.50 | 90.71 | 0 |
| Comparative Example 1 | 0 | 0 | 0 | 0 | 105 | 2.86 | 87.08 | Not applicable |
| Comparative Example 2 | 100 | 0 | 0 | 0 | 200 | 1.17 | 91.99 | 99 |
| Comparative Example 3 | 100 | 0 | 10 | 0 | 250 | 2.95 | 91.83 | 5 |
| Comparative Example 4 | 100 | 0 | 30 | 0 | 180 | 3.96 | 91 | 3 |
| Comparative Example 5 | 100 | 0 | 50 | 0 | 215 | 8.88 | 90.48 | 3 |
| Comparative Example 6 | 100 | 0 | 90 | 0 | 190 | 3.85 | 90.47 | 11 |

| | | | | | | | | |
|---|---|---|---|---|---|---|---|---|
| (*not according to the invention) | | | | | | | | |

### •Peel-off: the number of detached pieces among 100 cross-cut pieces (5mm x 5mm)

As shown in Table 1, it may be confirmed that the films according to the exemplary embodiments of the present invention have high transparency and low haze as compared with polypropylene carbonate (PPC) in Comparative Example 2. In addition, it may be confirmed that in the films according to the exemplary embodiments of the present invention, damage to the transparency was not nearly present as compared with the existing transparent polypropylene carbonate (PPC)-polyvinyl acetate (PVAc) blend. In the case in which polyvinyl acetate (PVAc) was added to a binary component blend of polypropylene carbonate (PPC) and poly(D,L-lactide-co-glycolide) (PLGA) to prepare a ternary component blend, it may be confirmed that the adhesive force was significantly increased as compared with the existing polypropylene carbonate (PPC) film or binary components films, that is, the PPC-PLGA blend film or PPC-PVAc blend film. Therefore, the binary component blend of PAC-PLGA and the tertiary component blend of PAC-PLGA-PVAc suggested in the present invention may provide a ground for allowing the mechanical properties of polyalkylene carbonate to be adjusted by blending while not deteriorating the optical transparency, as compared with the existing polyalkylene carbonate blend. It was shown that even in the case of adding the plasticizer in Example 6, the transparency was not damaged, the adhesive force was excellent, and the mechanical properties may be further adjusted variously through changes in the physical properties due to plasticization instead of depending on only the blending of the resin.

## Claims

1. A polyalkylene carbonate blend composition comprising:
aliphatic polycarbonate obtained by reacting carbon dioxide with one or at least two different kinds of epoxide compounds selected from a group consisting of (C2-C10)alkylene oxide substituted or unsubstituted with halogen or alkoxy, (C4-C20)cycloalkylene oxide substituted or unsubstituted with halogen or alkoxy, and (C8-C20)styrene oxide substituted or unsubstituted with halogen, alkoxy, alkyl, or aryl;
poly(D,L-lactide-co-glycolide) (PLGA); and
polyvinyl acetate.

2. The polyalkylene carbonate blend composition of claim 1, wherein in the poly(D,L-lactide-co-glycolide) (PLGA), a weight mixing ratio of lactide and glycolide is 85:15 to 15:85.

3. The polyalkylene carbonate blend composition of claim 1, wherein a weight mixing ratio of the aliphatic polycarbonate and the poly(D,L-lactide-co-glycolide) (PLGA) is 95:5 to 5:95.

4. The polyalkylene carbonate blend composition of claim 1, wherein the polyvinyl acetate is contained at a content of 5 to 95 weight% of the aliphatic polycarbonate.

5. The polyalkylene carbonate blend composition of claim 1, wherein the aliphatic polycarbonate has a melt index (150°C/5kg) of 0.01 to 350.

6. The polyalkylene carbonate blend composition of claim 1, further comprising one or two or more additives selected from a pigment, a dye, a filler, an antioxidant, a sunscreen agent, an antistatic agent, an anti-blocking agent, a slip agent, an inorganic filler, a mixing agent, a stabilizer, a tackifier resin, a modified resin, a leveling agent, a fluorescent whitening agent, a dispersant, a heat stabilizer, a photo-stabilizer, an ultraviolet absorber, a lubricant, and a plasticizer.

7. The polyalkylene carbonate blend composition of any one of claims 1 to 6, wherein it is mixed by a twin screw extruder or solvent casting.

8. A molded article comprising the composition of any one of claims 1 to 7.

9. The molded article of claim 8, wherein it is used for an interlayer sheet, an optical or package film, or a resin binder.

## Patentansprüche

1. Polyalkylencarbonatmischungszusammensetzung, umfassend:
aliphatisches Polycarbonat, erhalten durch Umsetzen von Kohlendioxid mit einer oder mindestens zwei verschiedenen Arten von Epoxidverbindungen, ausgewählt aus einer Gruppe bestehend aus (C2-C10)Alkylenoxid, substituiert oder unsubstituiert mit Halogen oder Alkoxy, (C4-C20)Cycloalkylenoxid, substituiert oder unsubstituiert mit Halogen oder Alkoxy, und (C8-C20)Styroloxid, substituiert oder unsubstituiert mit Halogen, Alkoxy, Alkyl oder Aryl;
Poly(D,L-Lactid-Co-Glykolid) (PLGA); und
Polyvinylacetat.

2. Polyalkylencarbonatmischungszusammensetzung nach Anspruch 1, wobei in dem Poly(D,L-Lactid-Co-Glycolid) (PLGA) ein Gewichtsmischungsverhältnis von Lactid und Glycolid 85:15 bis 15:85 beträgt.

3. Polyalkylencarbonatmischungszusammensetzung nach Anspruch 1, wobei ein Gewichtsmischungsverhältnis des aliphatischen Polycarbonats und des Poly(D,L-Lactid-Co-Glycolid) (PLGA) 95:5 bis 5:95 beträgt.

4. Polyalkylencarbonatmischungszusammensetzung nach Anspruch 1, wobei das Polyvinylacetat in einem Gehalt von 5 bis 95 Gew.-% des aliphatischen Polycarbonats enthalten ist.

5. Polyalkylencarbonatmischungszusammensetzung nach Anspruch 1, wobei das aliphatische Polycarbonat einen Schmelzindex (150°C/5 kg) von 0,01 bis 350 aufweist.

6. Polyalkylencarbonatmischungszusammensetzung nach Anspruch 1, des Weiteren umfassend ein oder zwei oder mehrere Additive, ausgewählt aus einem Pigment, einem Farbstoff, einem Füllstoff, einem Antioxidans, einem Sonnenschutzmittel, einem Antistatikum, einem Antiblockmittel, einem Gleitmittel, einem anorganischen Füllstoff, einem Mischmittel, einem Stabilisator, einem Klebrigmacherharz, einem modifizierten Harz, einem Ausgleichsmittel, einem fluoreszierenden Aufhellungsmittel, einem Dispersionsmittel, einem Hitzestabilisator, einem Photostabilisator, einem Ultraviolettabsorber, einem Schmierstoff und einem Weichmacher.

7. Polyalkylencarbonatmischungszusammensetzung nach einem der Ansprüche 1 bis 6, das durch einen Doppelschneckenextruder oder Lösungsmittelguss gemischt wird.

8. Geformter Gegenstand, umfassend die Zusammensetzung nach einem der Ansprüche 1 bis 7.

9. Geformter Gegenstand nach Anspruch 8, der für eine Zwischenschicht, einen optischen oder Verpackungsfilm oder ein Harzbindemittel verwendet wird.

## Revendications

1. Composition de mélange de polyalkylène carbonates comprenant:
polycarbonate aliphatique obtenu en faisant réagir du dioxyde de carbone avec un ou au moins deux types différents de composés époxydes choisis dans un groupe constitué par un oxyde d'alkylène (en C2-C10) substitué ou non substitué par halogène ou alcoxy, un oxyde de cycloalkylène (en C4-C20) substitué ou non substitué par halogène ou alcoxy, et oxyde de styrène (en C8-C20) substitué ou non substitué par halogène, alcoxy, alkyle ou aryle;
poly(D, L-lactide-co-glycolide) (PLGA); et
acétate de polyvinyle.

2. Composition de mélange de polyalkylène carbonates selon la revendication 1, dans laquelle, dans le poly(D, L-lactide-co-glycolide) (PLGA), un rapport en poids de mélange de lactide et de glycolide est de 85:15 à 15:85.

3. Composition de mélange de polyalkylène carbonates selon la revendication 1, dans laquelle le rapport en poids de mélange du polycarbonate aliphatique et du poly(D, L-lactide-co-glycolide) (PLGA) est de 95:5 à 5:95.

4. Composition de mélange de polyalkylène carbonates selon la revendication 1, dans laquelle l'acétate de polyvinyle est contenu en une teneur de 5 à 95% en poids du polycarbonate aliphatique.

5. Composition de mélange de polyalkylène carbonates selon la revendication 1, dans laquelle le polycarbonate aliphatique a un indice de fusion (150°C/5 kg) de 0,01 à 350.

6. Composition de mélange de polyalkylène carbonates selon la revendication 1, comprenant en outre un ou deux ou plusieurs additifs choisis parmi un pigment, un colorant, une charge, un antioxydant, un agent de protection solaire, un agent antistatique, un agent anti-bloquant, un agent de glissement, une charge inorganique, un agent de mélange, un stabilisant, une résine tackifiante, une résine modifiée, un agent d'égalisation, un agent de blanchiment fluorescent, un dispersant, un stabilisant thermique, un photo-stabilisant, un absorbeur d'ultraviolets, un lubrifiant et un plastifiant.

7. Composition de mélange de polyalkylène carbonates selon l'une quelconque des revendications 1 à 6, dans laquelle elle est mélangée par une extrudeuse à deux vis ou par coulée en solution.

8. Article moulé comprenant la composition de l'une quelconque des revendications 1 à 7.

9. Article moulé selon la revendication 8, dans lequel il est utilisé pour une feuille intercalaire, un film optique ou d'emballage, ou un liant à base de résine.
